Europäisches Patentamt

**European Patent Office**

**Office européen des brevets**

(19)

(11) Numéro de publication : **0 120 785**
**B1**

(12)

# FASCICULE DE BREVET EUROPÉEN

(45) Date de publication du fascicule du brevet :
09.09.87

(21) Numéro de dépôt : **84400594.2**

(22) Date de dépôt : **23.03.84**

(51) Int. Cl.⁴ : **B 01 D 33/04**

(54) **Bande transporteuse pour filtre horizontal sous vide à bande sans fin.**

(30) Priorité : **25.03.83 FR 8304930**

(43) Date de publication de la demande :
**03.10.84 Bulletin 84/40**

(45) Mention de la délivrance du brevet :
**09.09.87 Bulletin 87/37**

(84) Etats contractants désignés :
**AT BE CH DE GB IT LI NL SE**

(56) Documents cités :
**FR-A- 2 012 164**
**FR-A- 2 135 458**
**GB-A- 2 102 300**

(73) Titulaire : **F. AOUSTIN & Cie. Société anonyme dite:**
**11, rue de Préaux**
**F-76160 Darnetal (FR)**

(72) Inventeur : **Aoustin, Jean**
**2 rue de la Corderie**
**F-76000 Rouen (FR)**

(74) Mandataire : **Bruder, Michel**
**Cabinet Michel Bruder 10, rue de la Pépinière**
**F-75008 Paris (FR)**

Jouve, 18, rue St-Denis, 75001 Paris, France

## Description

La présente invention concerne une bande transporteuse pour filtre horizontal sous vide à bande sans fin.

On connaît déjà des filtres à bande sans fin qui comportent essentiellement une bande transporteuse sans fin en caoutchouc, s'étendant horizontalement et passant, à ses deux extrémités, sur deux tambours d'axes horizontaux. Cette bande comporte, le long de ses deux bords, des nervures ou saillies continues longitudinales, appelées « talons », si bien que la bande transporteuse forme en quelque sorte une auge. Une toile filtrante sans fin sur laquelle est placée une masse à filtrer imprégnée de liquide, est appliquée sur cette bande transporteuse et elle repose sur les deux talons latéraux et sur le fond de l'auge formée par la bande transporteuse, fond qui présente des rainures transversales permettant l'écoulement du liquide résultant de la filtration vers des orifices percés dans la partie centrale de la bande. En dessous du brin supérieur de la bande transporteuse se trouve une boîte à vide s'étendant longitudinalement en dessous des orifices percés dans la partie centrale de la bande, afin de créer une dépression en dessous de la toile filtrante et d'aspirer ainsi le liquide imprégnant la masse à filtrer disposée sur la toile filtrante.

Du fait du passage de la bande transporteuse sur les tambours, ses talons latéraux sont soumis, à ces endroits, à des contraintes de tension qui finissent, au bout d'un certain temps, par provoquer des défauts tels que déchirements ou craquelures.

Pour remédier à cet inconvénient on a déjà envisagé, ainsi qu'il est décrit dans le brevet GB-A-2 102 300, de donner à ces talons une certaine possiblité d'extension longitudinale dans leur zone externe, c'est-à-dire celle qui est située à l'opposé de la zone par laquelle ils sont raccordés à la bande transporteuse, afin que ces talons puissent en quelque sorte se déployer à la manière d'un éventail lorsque la bande passe sur les tambours. A cet effet on a utilisé comme talons latéraux des toiles caoutchoutées plissées collées, à leur base, à la bande transporteuse et dont les ondulations peuvent ainsi se déployer à l'extérieur, lors du passage sur les tambours. Toutefois, cette solution présente un certain nombre d'inconvénients et en premier lieu les toiles caoutchoutées plissées constituant les talons latéraux présentent un moment d'inertie faible, autrement dit une faible résistance aux efforts transversaux dus au poids de la masse à filtrer appliquée contre les talons latéraux. Il en résulte une mise hors d'usage très rapide de ces talons par déformation et par ailleurs, sous l'action de la pression exercée par la masse à filtrer, la toile filtrante tend à s'engager dans le vide trop grand entre les ondulations et du fait de cette déformation de la toile filtrante il résulte une perte incontrôlée du vide créé par la boîte à vide centrale, étant donné la communication avec l'extérieur établie à cet endroit soit à travers la masse à filtrer moins dense à cet endroit, soit à l'extérieur de la toile entre les deux parois d'une onde, qui descendent jusqu'à la bande.

La présente invention vise à remédier à ces inconvénients en procurant une bande transporteuse sans fin pourvue de talons latéraux assurant une excellente tenue de la toile filtrante dans les zones où la bande transporteuse se déplace horizontalement, tout en permettant l'extension longitudinale de la zone externe de ces talons aux endroits où la bande passe sur les tambours transporteurs.

A cet effet cette bande transporteuse pour filtre horizontal sous vide à bande sans fin, comportant, le long de ses bords, deux talons latéraux et longitudinaux formant, avec la bande proprement dite, une auge, chaque talon, en matière élastique moulée d'une seule pièce, comprenant, d'une part, une embase continue par laquelle il est fixé à la bande proprement dite, et, d'autre part, une paroi ondulée dont les plis tournés vers l'intérieur sont délimités par des surfaces planes d'appui de la toile filtrante situées dans le même plan que la surface interne de l'embase, est caractérisée en ce que les surfaces planes d'appui ont une forme rectangulaire de largeur supérieure à la largeur des fentes les séparant ou elles sont adjacentes les unes aux autres en étant séparées par des découpes transversales.

La bande transporteuse suivant l'invention offre l'avantage qu'elle assure une très bonne tenue latérale de la toile filtrante sur les trajets horizontaux de celle-ci et qu'elle évite également toute perte incontrôlée du vide créé par la boîte à vide centrale le long de ces trajets horizontaux grâce à la présence de l'embase continue du talon qui a une certaine hauteur constante surmontée des surfaces planes d'appui de la toile placées dans un même plan et séparées entre elles par des fentes de faible largeur. Ainsi la hauteur constante de l'embase continue du talon permet le passage permanent par le bas des fentes d'un débit de fuite, ainsi limité, d'air aspiré par la boîte à vide qui entraîne le liquide ayant tendance à stagner dans les rainures transversales de la bande.

On décrira ci-après, à titre d'exemples non limitatifs, diverses formes d'exécution de la présente invention, en référence au dessin annexé sur lequel :

La figure 1 est une vue en coupe verticale et transversale partielle de la zone marginale d'une bande transporteuse pourvue d'un talon latéral.

La figure 2 est une vue en coupe faite suivant la ligne II-II de la figure 1.

La figure 3 est une vue en coupe longitudinale partielle, la bande transporteuse étant représentée à plat sur une portion horizontale de son trajet.

La figure 4 est une vue en coupe longitudinale partielle semblable à celle de la figure 3, la bande étant représentée incurvée lors du passage sur un tambour.

La figure 5 est une vue en coupe verticale et transversale d'une variante d'exécution d'un talon latéral.

La figure 6 est une vue en plan du talon prise dans le sens de la flèche A sur la figure 5.

La figure 7 est une vue en coupe faite suivant la ligne VII-VII de la figure 5.

La figure 8 est une vue en coupe longitudinale partielle de la bande pourvue du talon représenté sur la figure 5, la bande étant à plat.

La figure 9 est une vue en coupe longitudinale partielle de la bande et du talon de la figure 5 lors du passage sur un tambour.

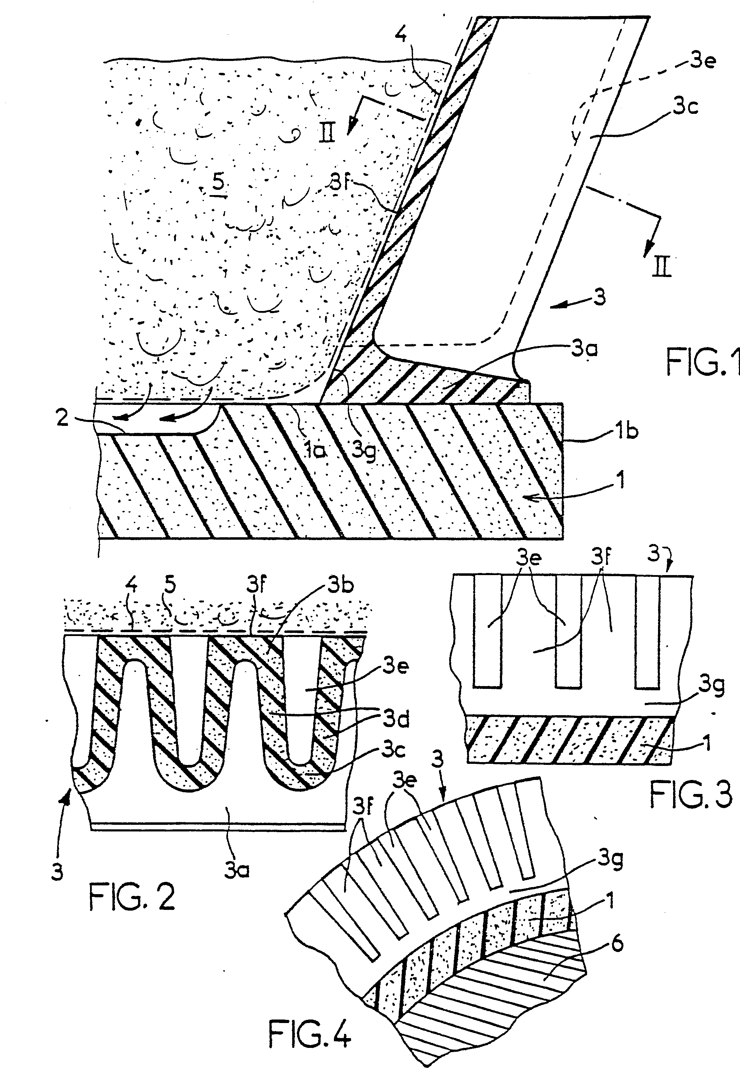

Sur les figures 1 à 4 est représentée une première forme d'exécution d'une bande transporteuse en caoutchouc 1 faisant partie d'un filtre sous vide à bande sans fin. Cette bande transporteuse 1 présente dans sa surface externe 1a, qui est la surface supérieure sur la figure 1, des rainures transversales 2 équidistantes, qui communiquent avec des trous non représentés prévus dans la partie centrale de la bande pour permettre l'écoulement, dans ces rainures, du liquide résultant de la filtration. Sur la surface externe 1a de la bande 1 et le long de chacun de ses chants 1b est fixé un talon longitudinal et latéral 3, en matière souple et élastique, par exemple en caoutchouc, si bien que les deux talons 3 délimitent avec la bande 1 une sorte d'auge. Une toile filtrante 4 sur laquelle est placée une masse à filtrer 5, repose sur la partie centrale de la face externe 1a de la bande 1, ainsi que sur les flancs internes de chaque talon 3. Ces flancs peuvent être perpendiculaires à la bande 1 ou ils sont de préférence inclinés vers l'extérieur de bas en haut d'un angle obtus pouvant aller jusqu'à 135° environ.

Chaque talon 3 est moulé d'une seule pièce en une matière souple et élastique, par exemple en caoutchouc, et il comporte une embase continue 3a par laquelle le talon 3 est fixé à la bande 1, par exemple par collage. Cette embase 3a est prolongée vers le haut par une paroi ondulée constituée de plis internes 3b, de plis externes 3c et de parties intermédiaires 3d reliant entre eux les plis internes 3b et les plis externes 3c. Ces ondulations délimitent ainsi des fentes 3e ouvertes vers l'intérieur de la bande et de petite largeur, par exemple 10 mm. Les plis internes 3b sont délimités, vers l'intérieur, par des surfaces internes planes coplanaires 3f, de même largeur de haut en bas, autrement dit la forme rectangulaire, et servant d'appui pour la toile filtrante 4. Ces surfaces planes d'appui 3f ont par exemple une largeur de 25 mm et elles assurent la résistance à la flexion dans le sens latéral.

La toile filtrante 4 est donc appliquée en permanence, sous l'effet de la pression due à la masse à filtrer 5, contre les surfaces internes planes 3f des plis internes 3b, en partie haute, et, en partie basse, contre la face interne continue 3g de l'embase 3a. Cette face interne 3g est située dans le même plan que les faces d'appui planes 3f, plan perpendiculaire ou incliné par rapport à la bande 1.

On voit donc, d'après la description qui précède, que le talon latéral 3 assure une tenue parfaite de la toile filtrante 4 le long des sections horizontales du trajet de la bande transporteuse 1. Par ailleurs, la toile filtrante 4 est parfaitement appliquée contre les surfaces planes d'appui 3f dans un même plan, lequel est continu en partie basse sur une hauteur constante et discontinu en partie haute mais en éléments séparés par des fentes de faible largeur qui ne permettent pas la déformation de la toile, donc la variation de densité de la masse à filtrer, si bien qu'il n'en résulte aucune perte de vide à cet endroit.

La figure 4 illustre le passage de la bande transporteuse 1 sur un tambour 6. On voit qu'à cet endroit le talon 3 est étiré dans le sens longitudinal, à l'extérieur, cet étirement étant rendu possible par suite d'un léger accroissement de l'ouverture des plis faisant partie de la paroi ondulée du talon 3.

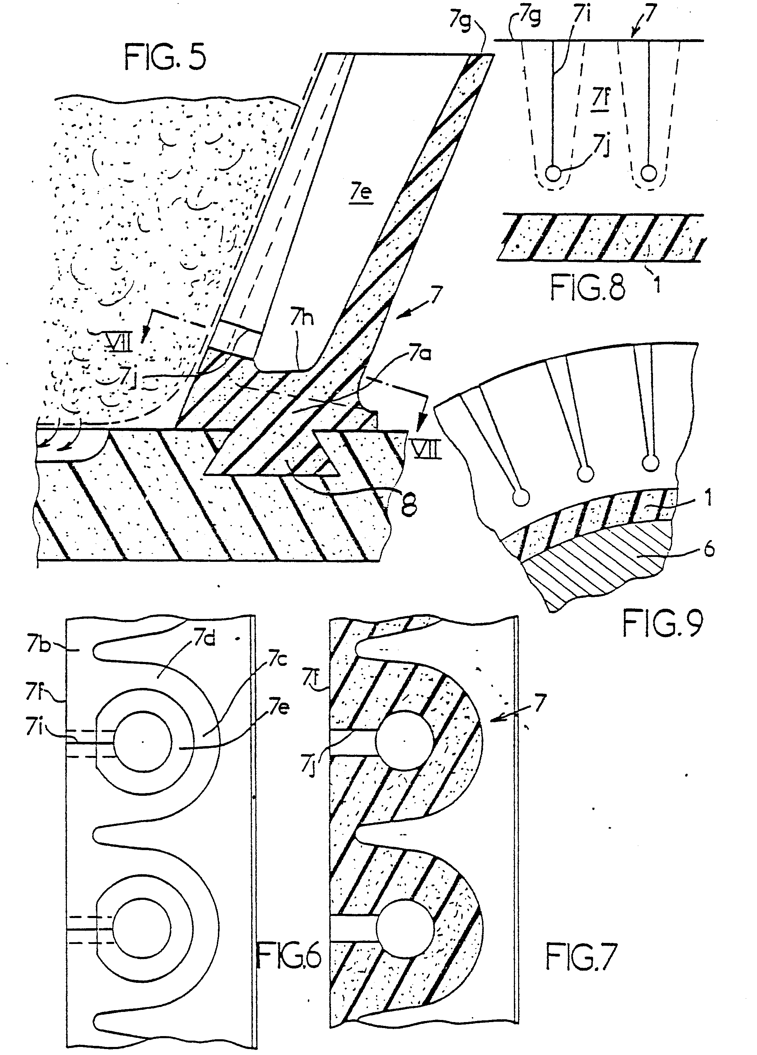

On décrira maintenant, en se référant aux figures 5 à 9, une variante d'exécution. Dans cette variante le talon 7 fixé à la bande 1 comporte une embase continue 7a par laquelle il est raccordé à la bande 1 et, au-dessus de cette embase, une paroi ondulée formant une seule pièce avec l'embase 7a. Cette paroi ondulée comprend des plis internes 7b, des plis externes 7c et des parties intermédiaires 7d. Dans cette forme d'exécution les plis internes 7b sont délimités vers l'intérieur par des surfaces d'appui planes 7f qui sont adjacentes les unes aux autres. La paroi ondulée du talon 7 est définie par des cheminées 7e venant de moulage, dont l'axe situé dans un plan perpendiculaire à la surface inférieure de l'embase 7a et aux surfaces d'appui planes 7f est parallèle à ces dernières cheminées. Celles-ci débouchent dans la face supérieure 7g du talon 7 et s'étendent jusqu'à l'embase 7a où elles se terminent par un fond 7h. Par ailleurs une découpe transversale 7i est effectuée dans la partie interne du talon 7, après moulage, pour séparer les divers plis internes 7b, cette découpe 7i s'étendant entre chaque cheminée 7e et les surfaces d'appui internes 7f de la bande transporteuse.

Lorsque la bande se déplace à plat, sur un parcours horizontal, cette découpe 7i constitue le plan de jonction transversal de deux plis internes adjacents 7b. On voit donc que dans cette forme d'exécution de l'invention le flanc interne du talon 7 est continu puisqu'il est constitué par la succession des surfaces d'appui planes 7f.

Un trou 7j est prévu à la partie inférieure de la zone où est formée la découpe 7i, pour faire communiquer le fond 7h de la cheminée 7e avec la surface externe 7f. Ce trou 7j délimite bien vers le bas la découpe 7i qui, sans lui, aurait tendance à se prolonger vers le bas de façon incontrôlée au cours des extensions successives des talons lors du passage de la bande sur les tambours, et selon sa position en hauteur, ce trou 7j permet le passage en permanence d'un débit de fuite contrôlée d'air aspiré par la boîte à vide et qui entraîne ainsi le liquide ayant tendance à stagner dans les rainures transversales 2.

La figure 9 illustre la façon dont les diverses surfaces d'appui planes 7f s'écartent légèrement les unes des autres, en éventail, lorsque la bande 2 passe sur le tambour fixe.

La figure 5 illustre une variante d'exécution de la liaison du talon 7 avec la bande 1. Dans ce cas l'embase 7a du talon 7 présente une nervure longitudinale 8 à section droite en queue d'aronde s'engageant étroitement dans une gorge longitudinale de même forme ménagée dans la surface supérieure 1a de la bande.

Dans la forme d'exécution illustrée sur les figures 5 à 9 les cheminées 7e pourraient avoir une section droite autre que circulaire, par exemple polygonale, ovoïde etc...

## Revendications

1. Bande transporteuse pour filtre horizontal sous vide à bande sans fin, comportant, le long de ses bords, deux talons latéraux et longitudinaux formant, avec la bande proprement dite, une auge, chaque talon (3, 7), en matière élastique moulée d'une seule pièce, comprenant, d'une part, une embase continue (3a, 7a) par laquelle il est fixé à la bande proprement dite (1), et, d'autre part, une paroi ondulée (3b, 3c, 3d ; 7b, 7c, 7d) dont les plis tournés vers l'intérieur (3b, 7b) sont délimités par des surfaces planes (3f, 7f) d'appui de la toile filtrante (4) situées dans le même plan que la surface interne de l'embase, caractérisée en ce que les surfaces planes d'appui (3f, 7f) ont une forme rectangulaire de largeur supérieure à la largeur des fentes (3e) les séparant ou elles sont adjacentes les unes aux autres en étant séparées par des découpes transversales (7i).

2. Bande transporteuse suivant la revendication 1 caractérisée en ce que les découpes transversales (7i) s'étendent entre les surfaces d'appui internes (7f) et des cheminées (7e) venant de moulage, ces cheminées débouchant dans la face supérieure (7g) du talon (7) et s'étendant jusqu'à l'embase (7a) où elles se terminent par un fond (7h).

3. Bande transporteuse suivant la revendication 2 caractérisée en ce qu'un trou (7j) est prévu à la partie inférieure de la zone où est formée chaque découpe (7i), pour faire communiquer le fond (7h) de la cheminée (7e) avec la surface interne (7f).

4. Bande transporteuse suivant l'une quelconque des revendications précédentes caractérisée en ce que les surfaces planes (3f, 7f) d'appui de la toile filtrante (4) sont inclinées, par rapport à la bande proprement dite, d'un angle allant de 90 à 135° environ.

5. Bande transporteuse suivant l'une quelconque des revendications 1 à 4 caractérisée en ce que chaque talon (3, 7) est assemblé avec la bande (1) par collage.

6. Bande transporteuse suivant l'une quelconque des revendicaions 1 à 4 caractérisée en ce que chaque talon (3, 7) est assemblé avec la bande (1) au moyen d'une nervure (8) en queue d'aronde, en saillie sous la face inférieure de l'embase (7a) du talon (7) et qui est engagée dans une gorge de même forme prévue dans la bande (1).

## Claims

1. Conveyer belt for horizontal endless belt vacuum filter, including, along its edges, two lateral and longitudinal flanges forming a trough with the belt properly speaking, each flange (3, 7) made from a molded resilient material in one piece including, on the one hand, a continuous base (3a, 7a) by which it is fixed to the belt properly speaking (1) and, on the other hand, an undulating wall (3b, 3c, 3d ; 7b, 7c, 7d) whose inwardly turned folds (3b, 7b) are defined by flat surfaces (3f, 7f), on which the filtering cloth (4) bears, situated in the same plane as the internal surface of the base, characterized in that the flat bearing surfaces (3f, 7f) have a rectangular shape of a width greater than the width of the slits (3e) separating them or they are adjacent each other while being separated by transfer cut outs (7i).

2. Conveyer belt according to claim 1, characterized in that the transverse cut outs (7i) extend between the internal bearing surfaces and integrally molded chimneys (7e), these chimneys opening into the upper face (7g) of the flange (7) and extending as far as the base (7a) where they end in a bottom (7h).

3. Conveyer belt according to claim 2, characterized in that a hole (7g) is provided at the lower part of the zone where each cut out (7i) is formed, for causing the bottom (7h) of the chimney (7e) to communicate with the internal surface (7f).

4. Conveyer belt according to any one of the preceding claims, characterized in that the flat surfaces (3f, 7f) on which the filtering cloth (4) bears are slanted, with respect to the belt properly speaking through an angle from about 90 to 135°.

5. Conveyer belt according to any one of claims 1 to 4, characterized in that each flange (3, 7) is assembled with the belt (1) by bonding.

6. Conveyer belt according to any one of claims 1 to 4, characterize in that each flange (3, 7) is assembled with the belt (1) by means of a dove tail rib (8) projecting under the lower face of the base (7a) of the flange (7) and which is engaged in a groove of the same shape provided in the belt (1).

## Patentansprüche

1. Rotierender horizontaler endloser Vakuumbandfilter, welcher längs seiner Ränder zwei seitliche und in Längsrichtung verlaufende Leisten aufweist, die mit dem Filterband eine Mulde bilden, wobei jede aus einem elastischen Material in einem Stück geformte Leiste (3, 7) einerseits einen durchlaufenden Sockel (3a, 7a) aufweist, der am Filterband (1) befestigt ist, und andererseits eine gewellte Wand (3b, 3c, 3d ; 7b, 7c, 7d), deren nach innen gewandte Falten (3b, 7b) von ebenen Anlegeflächen (3f, 7f) für das Filtertuch (4) begrenzt werden, die sich in der gleichen Ebene befinden wie die Innenfläche des Sockels, dadurch gekennzeichnet, daß die ebenen Anlegeflächen (3f, 7f) eine rechteckige Form aufweisen, deren Breite größer ist als die Breite der sie trennenden Zwischenräume (3e), oder die aneinander angrenzen und durch Transversalschnitte (7i) voneinander getrennt sind.

2. Vakuumbandfilter nach Anspruch 1, dadurch gekennzeichnet, daß die Transversalschnitte (7i) sich zwischen den inneren Anlegeflächen (7f) und eingeformten, schachtartigen Sacklöchern (7e) erstrecken, die in der obenliegenden Oberfläche (7g) der Leiste (7) ausmünden und sich bis zum Sockel (7a) erstrecken, wo sie an einem Boden (7h) enden.

3. Vakuumbandfilter nach Anspruch 2, dadurch gekennzeichnet, daß im unteren Abschnitt des Bereichs, in dem jeder Transversalschnitt (7i) ausgebildet ist, ein Loch (7j) vorgesehen ist, um den Boden (7h) des Sacklochs (7e) mit der innenliegenden Oberfläche (7f) zu verbinden.

4. Vakuumbandfilter nach einem der vorhergehenden Ansprüche, dadurch gekennzeichnet, daß die ebenen Anlegeflächen (3f, 7f) für das Filtertuch (4) gegenüber dem Filterband in einem Winkel von etwa 90 bis 135° geneigt sind.

5. Vakuumbandfilter nach einem der Ansprüche 1 bis 4, dadurch gekennzeichnet, daß jede Leiste (3, 7) mit dem Filterband (1) durch Kleben verbunden ist.

6. Vakuumbandfilter nach einem der Ansprüche 1 bis 4, dadurch gekennzeichnet, daß jede Leiste (3, 7) mit dem Filterband (1) über eine schwalbenschwanzförmige, unter die Unterseite des Sockels (7a) der Leiste (7) vorspringende, in eine entsprechend geformte Nut im Filterband (1) eingreifende Leiste (8) mit dem Filterband (1) verbunden ist.

0 120 785

FIG.1

3e
3c
3a
1b
1
2
1a  3g
4
5
3f

FIG. 2

4  5  3f  3b
3e
3d
3c
3
3a

FIG.3

3e  3f  3
3g
1

FIG.4

3
3e
3f
3g
1
6

FIG. 5

7e

7h

7j

VII

7

7a

VII

8

7g

7g    7i    7

7f

7j

FIG.8    1

FIG.9

1

6

7b    7d

7f    7c

7i    7e

FIG.6

7f

7j    7

FIG.7